**Europäisches Patentamt**

**European Patent Office**

**Office européen des brevets**

(19)

(11) Veröffentlichungsnummer: **0 186 141 B1**

# EUROPÄISCHE PATENTSCHRIFT

(12)

(45) Veröffentlichungstag der Patentschrift: **11.09.91**

(51) Int. Cl.⁵: **H04J 3/06, H04J 3/08**

(21) Anmeldenummer: **85116257.8**

(22) Anmeldetag: **19.12.85**

(54) **Muldex mit Kanalverteiler für Digitalsignale verschiedener Hierachiestufen.**

(30) Priorität: **20.12.84 US 683901**
**25.07.85 US 758990**

(43) Veröffentlichungstag der Anmeldung:
**02.07.86 Patentblatt 86/27**

(45) Bekanntmachung des Hinweises auf die
Patenterteilung:
**11.09.91 Patentblatt 91/37**

(84) Benannte Vertragsstaaten:
**AT BE CH DE FR GB IT LI NL SE**

(56) Entgegenhaltungen:
**DE-A- 3 228 518**

**NATIONAL TELECOMMUNICATIONS CONFE-
RENCE, New Orleans, 29. November - 3. Dezember 1981, Seiten B1.2.1 - B1.2.7, IEEE; R.P.
ABBOTT et al.: "Digital access and cross-
connect system - system architecture"**

**PROSPEKT VON SIEMENS AG, Bestell.-Nr.
S42023-A750-A1-1-29;
"Digitalsignal-Kanalverteiler DKVt2"**

(73) Patentinhaber: **Siemens Aktiengesellschaft**
**Wittelsbacherplatz 2**
**W-8000 München 2(DE)**

(72) Erfinder: **Segal, Henry P.**
**508 N. Salem Road**
**Ridgefield Connecticut 05877(US)**
Erfinder: **de Wilde, Carl A.**
**105 Manchester Lane**
**Stony Brook New York 11790(US)**

## Beschreibung

Die Erfindung bezieht sich auf ein Muldex mit ersten Anschlüssen für ankommende und abgehende Digitalsignale niedriger Bitrate, mit zweiten Anschlüssen für ankommende und abgehende Digitalsignale hoher Bitrate, mit einem zwischen den ersten und den zweiten Anschlüssen angeordneten Multiplexer/Demultiplexer, mit ersten Schnittstellen zwischen den ersten Anschlüssen und den Anschlüssen niedriger Bitrate des Multiplexer/Demultiplexers und mit zweiten Schnittstellen zwischen den Anschlüssen hoher Bitrate des Multiplexers/Demultiplexers und den zweiten Anschlüssen (vgl. DE-A-3 228 518).

Muldex ist die Kurzbezeichnung für ein Multiplexer und Demultiplexer enthaltendes Gerät. Unter niedriger und hoher Bitrate sind Bitraten unterschiedlicher Hierarchiestufen zu verstehen.

Die infragekommenden Digitalsignale gehören insbesondere zu den verschiedenen Hierarchiesystemen, die in der Zeitschrift "telcom report", 2 (1979) Beiheft Digital-Übertragungstechnik, Seiten 16 - 20, insbesondere Tabelle 1 dargestellt sind. Multiplexer und Demultiplexer sind in derselben Druckschrift auf den Seiten 59 - 64 beschrieben. Die nordamerikanischen Normen für Digitalsignal-Multiplexer, die DS1-, DS1C- und DS2-Signale in DS3-Signale umsetzen, sind in der Bell-Druckschrift "Digital Multiplexers Requirements and Objectivs", Direktor -Exchange Systems Design, AT&T, 1982, dargestellt und besprochen. Die nachfolgende Tabelle zeigt diese Signale mit ihrer Sprachkanalzahl und ihrer Übertragungs-Bitrate.

| Leitung | Kanalzahl | Bitrate |
|---------|-----------|---------|
| DS0 | 1 | 64 kbit/s |
| DS1 | 24 | ca. 1,5 Mbit/s |
| DS1C | 48 | ca. 3 Mbit/s |
| DS2 | 96 | ca. 6 Mbit/s |
| DS3 | 672 | ca. 45 Mbit/s |

Ein DS0-Kanal kann in jeder Übertragungsrichtung achttausend 8-bit-Gruppen von Sprache oder Daten pro Sekunde senden und empfangen. Vierundzwanzig DS0-Kanäle können wiederum zu einem DS1-Kanal zusammengefaßt werden. Dabei werden je eine 8-bit-Gruppe der vierundzwanzig DS0-Kanäle und ein einzelnes Rahmenkennungsbit in einen 193-bit-Rahmen eingefügt.

Zur nordamerikanischen Hierarchie gehören M13-Multiplexer, die achtundzwanzig DS1-Signale in ein DS3-Signal umsetzen. Dies wird mittels sieben M12-Multiplexern erreicht, von denen jeder vier DS1-Signale in ein DS2-Signal überführt. Ein M23-Multiplexer setzt die sieben DS2-Signale wiederum in ein DS3-Signal um.

Zusätzliche Flexibilität wird durch einen sogenannten MX3-Multiplexer erreicht, der eine verschiedene Anzahl von DS1-, DS1C- und DS2-Signale in ein einziges DS3-Signal umsetzen kann. Beispielsweise können an die Eingänge eines M23-Multiplexers entweder vier zusammengefaßte DS1-Signale, zwei zusammengefaßte DS1C-Signale oder DS2-Signale angelegt werden.

Unter der Bezeichnung "DACS" (Digital Access and Cross Connect System) der Firma AT&T Technologies Inc. ist ein digitales Verteilersystem bekanntgeworden, welches zwischen eine veränderbare Anzahl von DS1- und DS1C-Leitungen über Eingänge und Ausgänge geschaltet ist und jeden Sprachkanal einer Leitung mit einem Sprachkanal auf einer anderen Leitung zu verbinden vermag. Dieses System arbeitet in der Art einer Telefonvermittlung. Es enthält einen Koppelpunktbereich, um eine beliebige DS1-oder DS1C-Leitung mit einer anderen DS1- oder DS1C-Leitung zu verbinden. Das System kann kein Multiplexen auf der DS2-oder DS3-Ebene ausführen.

Eine einzelne Umsetzung von einer Bitrate auf eine andere kann durch eine Mehrzahl einzelner MX3-Multiplexer bewirkt werden. Außerdem können auch MI2- und MC2- Multiplexer zur Umsetzung auf eine DS2-Bitrate dienen. Während Multiplexgeräte dieser Art auf Sprachübertragungs-Netzknoten besonderer Konfiguration zugeschnitten werden können, sind sie nicht leicht zu programmieren, so daß Änderungen in der Knotenkonfiguration teuer und zeitraubend sind. Das bekannte Gerät beinhaltet eine bestimmte Multiplexer-Hardware, die jedesmal in das System ein- und aus diesem wieder ausgebaut werden muß, wenn eine Änderung durchzuführen ist.

Aufgabe der Erfindung ist es, ein Muldex zu realisieren, in dem eine Kanalverteilung auf verschiedene Hierarchiestufen vorgenommen werden kann.

Ausgehend von einem Muldex der einleitend geschilderten Art wird diese Aufgabe erfindungsgemäß dadurch gelöst, daß zwischen den ersten Schnittstellen und dem Multiplexer/Demultiplexer ein Koppelfeld mit einer Koppelfeldsteuerung für eine Kanalverteilung vorgesehen sind.

Bei einer vorteilhaften Ausführungsform sind Sendebus-Datenleitungen, Empfangsbus-Datenleitungen, Sendebus-Adressenleitungen, Empfangsbus-Adressenleitungen und Busanschlußeinrichtungen mit Speicher und Speichersteuerung vorgesehen.

Vorteilhaft ist es dabei, wenn in den ersten Busanschlußeinrichtungen ein Demultiplexer und ein Seriell-Parallel-Umsetzer und ein diesem nachgeschalteter erster adressierbarer Schreib-Lese-Speicher (RAM) zur Aufnahme von Daten aus einem Digitalsignal niederer Bitrate und von Adressen vorgesehen sind und wenn in den zweiten Busanschlußeinrichtungen ein zweiter adressierbarer Schreib-Lese-Speicher (RAM) zur Aufnahme von Daten aus einem Digitalsignal hoher Bitrate und von Adressen sowie ein diesem nachgeschalteter Parallel-Seriell-Umsetzer und Multiplexer vorgesehen sind.

Dabei ist es wiederum vorteilhaft, wenn im ersten adressierbaren Schreib-Lese-Speicher (RAM) eine bestimmte Adresse wenigstens ein bestimmtes Byte aus einem bestimmten Zeitkanal enthält und wenn im zweiten adressierbaren Schreib-Lese-Speicher (RAM) ein bestimmtes Byte für eine Übertragung zu einem bestimmten Zeitkanal gemäß der Adressensignalisierung bereitgestellt wird.

In den ersten Busanschlußeinrichtungen sind vorteilhafterweise ein Bustreiber an den Sendebus-Datenleitungen und ein erster Adressenbusempfänger und in den zweiten Busanschlußeinrichtungen ein zweiter Adressenbusempfänger und ein Datenbusempfänger vorgesehen, der Bytes in den zweiten adressierbaren Schreib-Lese-Speicher (RAM) in Plätze einspeist, die vom zweiten Adressenbusempfänger angegeben wurden.

Vorteilhaft ist es weiterhin, wenn in der zweiten Busanschlußeinrichtung zwischen dem zweiten adressierbaren Schreib-Lese-Speicher (RAM) und dem Parallel-Seriell-Umsetzer und Multiplexer eine logische Schaltung vorgesehen ist, die einem rahmensynchronen Einsetzen von Signalisierungsbits in den Datenstrom dient.

Für den praktischen Betrieb ist es vorteilhaft, wenn ein Gehäuse für einsteckbare Baugruppen vorgesehen ist, wenn an der Gehäuserückwand eine Leiterplatte mit wenigstens Sende- und Empfangbusleitungen vorgesehen ist und wenn Steckverbindungen zur elektrischen und mechanischen Verbindung der Baugruppen mit der Leiterplatte vorgesehen sind.

In Weiterbildung der Erfindung ist es vorteilhaft, wenn das Gehäuse für die Aufnahme mehrerer Muldex vorgesehen ist, wenn jeder Leitungsanschlußeinheit für hohe Bitrate eine Buserweiterungs-Baugruppe zugeordnet ist, wenn in der Buserweiterungs-Baugruppe ein mit der Sendebus-Datenleitung und der Sendebus-Adressenleitung verbundener Sender-Erweiterungsteil für hohe Bitrate vorgesehen ist, wenn in der Buserweiterungs-Baugruppe ein mit der Empfangsbus-Datenleitung und der Empfangsbus-Adressenleitung verbundener Empfänger-Erweiterungsteil für hohe Bitrate vorgesehen ist, wenn eine mit dem Sender-Erweiterungsteil und dem Empfänger-Erweiterungsteil verbundene Busmatrix-Kontrolleinrichtung vorgesehen ist und wenn Schalter vorgesehen sind, über die die Busmatrix-Kontrollschaltung die Zuleitung zu den Sende- und Empfangsbusleitungen schließen oder öffnen kann.

Wenn bisher insbesondere von den nordamerikanischen DS-Signalen die Rede war, so gilt das Gesagte entsprechend für Signale mit europäischer Bitrate und europäische Multiplexer und Demultiplexer sowie sonstige Bitraten und Geräte.

Anhand von Ausführungsbeispielen wird die Erfindung nachstehend näher erläutert.

| | |
|---|---|
| Figur 1 | zeigt das Blockschaltbild einer Anordnung, die mehrere erfindungsgemäße Muldex umfaßt, |
| Figur 2 | zeigt die Anordnung nach Figur 1 mit einer detaillierten Darstellung des zum Koppelfeld gehörenden Bussystems, |
| Figur 3 | zeigt eine Anordnung zum Multiplexen von vier DS1-Signalen zu bis zu vier DS3-Signalen, |
| Figur 4 | zeigt eine Anordnung zum Demultiplexen von vier DS1-Signalen aus bis zu vier DS3-Signalen, |
| Figur 5 | zeigt detailliert den Anschluß von Leitungsanschlußeinheiten für hohe und niedrige Bitrate an das Bussystem, |
| Figur 6a und 6b | zeigen detailliert eine Leitungsanschlußeinheit für hohe Bitrate, |
| Figur 7 | zeigt ein Blockschaltbild zur Erläuterung der Wirkungsweise der Leitungsanschlußeinheit nach den Figuren 6a und 6b, |
| Figur 8a und 8b | zeigen eine Leitungsanschlußeinheit für niedrige Bitrate, |
| Figur 9 | zeigt ein erfindungsgemäßes Muldex mit einer DSO-Kanalverteilung, |
| Figur 10 | zeigt das Prinzip einer Zusammenschaltung von mehr als vier erfindungsgemäßen |

Muldex und

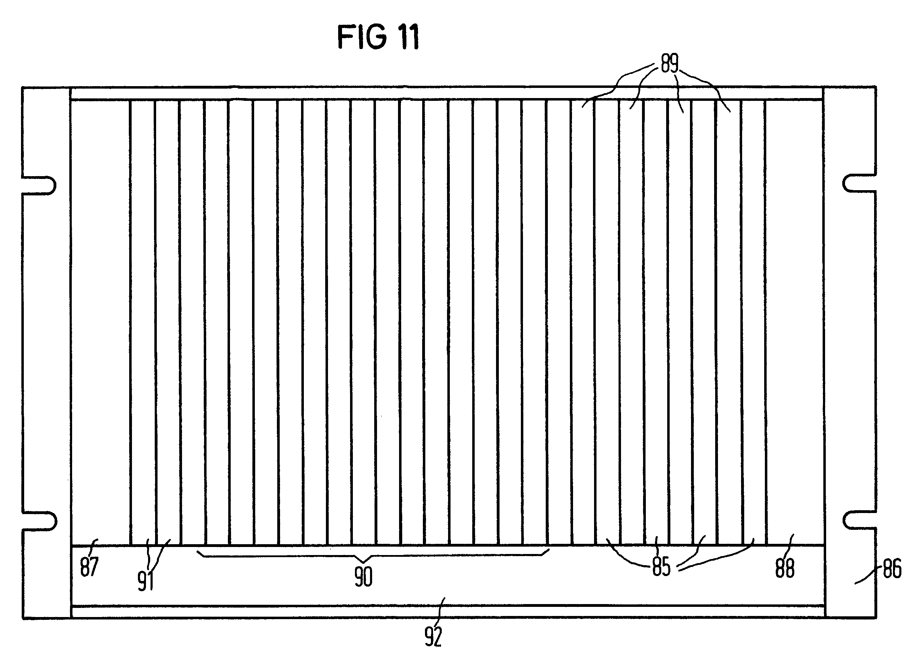

Figur 11             zeigt einen Geräterahmen zur Aufnahme mehrerer erfindungsgemäßer Muldex.

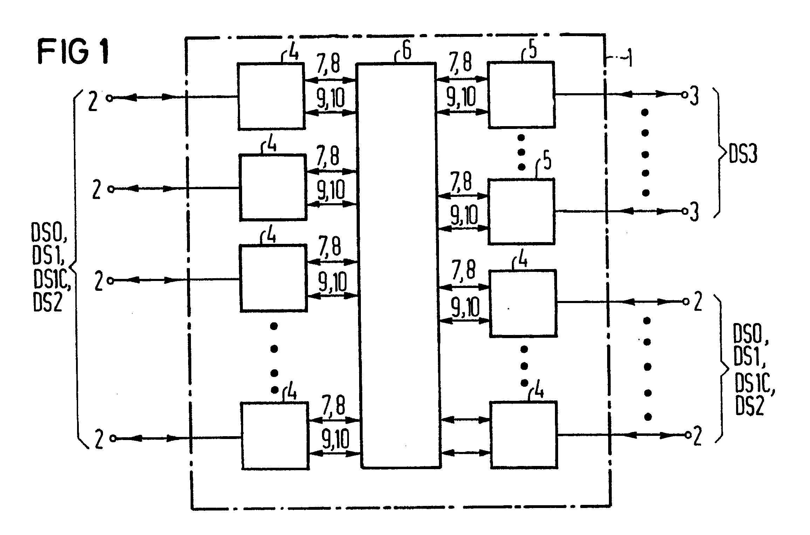

Figur 1 zeigt ein Blockschaltbild einer Anordnung 1 mit mehreren erfindungsgemäßen Muldex. Sie enthält mehrere Leitungsanschlußeinheiten 4 für niedrige Bitrate mit einem Anschluß 2, mehrere Leitungsanschlußeinheiten 5 für hohe Bitrate mit Anschluß 3 und ein Bussystem 6. Dieses ist mit allen Leitungsanschlußeinheiten 4 und 5 über Sendebus-Datenleitungen 7, Empfangsbus-Datenleitungen 8, Sendebus-Adressenleitungen 9 und Empfangsbus-Adressenleitungen 10 verbunden. An die Anschlüsse 2 können DS0-, DS1-, DS1C- oder DS2-Signale und an die Anschlüsse 3 können DS3-Signale angelegt oder an diesen entnommen werden.

Bei Einsatz in der europäischen Digitalsignalhierarchie können beispielsweise an die Anschlüsse 2 2-Mbit/s- und/oder 8-Mbit/s-Signale und an die Anschlüsse 3 34-Mbit/s-Signale angelegt werden.

Die Leitungsanschlußeinheiten 4 zerlegen ankommende Signale in 8-bit-Gruppen, die Datenbytes von einzelnen PCM-Kanälen sein können, und übertragen jede 8-bit-Gruppe zusammen mit einer Zieladresse (5) bzw. gesteuert von einer Zieladresse (4) an das Bussystem 6. Weil alle Leitungsanschlußeinheiten 4 und 5 mit dem Bussystem 6 verbunden sind und alle auf diesem ankommenden Signale überwachen, wird die gesendete 8-bit-Gruppe von der Leitungsanschlußeinheit empfangen und übernommen, die die Zieladresse verarbeitet. Diese fügt die 8-bit-Gruppe wiederum in einen geeigneten Zeitschlitz eines zu bildenden Digitalsignals ein. Die Adresse für jede 8-bit-Gruppe enthält sowohl eine Raum- als auch eine Zeitinformation, die von allen Leitungsanschlußeinheiten 4 und 5 verstanden wird, um diese 8-bit-Gruppe in den richtigen Anschluß 2 oder 3 und in den richtigen Zeitschlitz einzuspeisen.

Im Vergleich mit dem relativ starren Durchschaltefeld und einzelnen fest verdrahteten Multiplexern nach dem Stand der Technik weist diese Erfindung sowohl eine flexiblere Verteil- als auch Multiplexmöglichkeit auf.

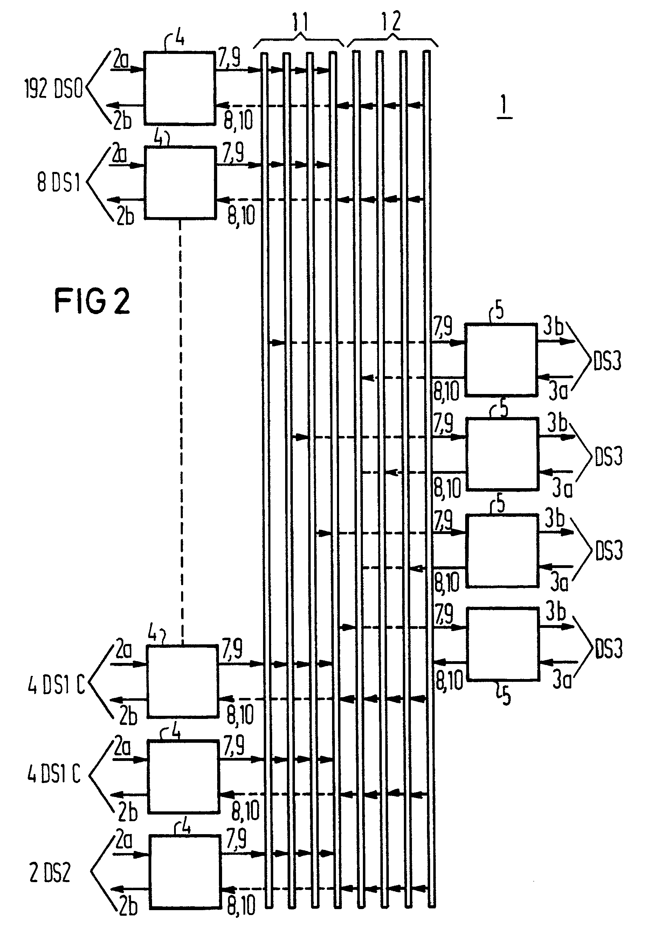

Figur 2 zeigt die Anordnung nach Figur 1 mit einem detaillierter dargestellten Bussystem 6. Dieses enthält Sende-Busleitungen 11 und Empfangs-Busleitungen 12. Als Verbindungselemente zwischen den Leitungsanschlußeinheiten 4 und 5 und dem Bussystem 6 sind Sendebus-Datenleitungen 7 und -Adressenleitungen 9 sowie Empfangsbus-Datenleitungen 8 und -Adressenleitungen 10 dargestellt. Der Anschluß 2 ist hier in einen Eingangsanschluß 2a und einen Ausgangsanschluß 2b aufgespalten; entsprechend sind anstelle des Anschlusses 3 Eingangsanschlüsse 3a und Ausgangsanschlüsse 3b gezeigt.

Es gibt vier Sende-Busleitungen 11 und vier Empfangsbusleitungen 12, weil vier Leitungsanschlußeinheiten 5 für hohe Bitrate, also vier Muldex anzuschließen sind. Jede Sende-Busleitung 11 und jede Empfangs-Busleitung 12 umfaßt zwei Busleitungsbündel, eines für 8-bit-Gruppen und eines für Adresseninformationen.

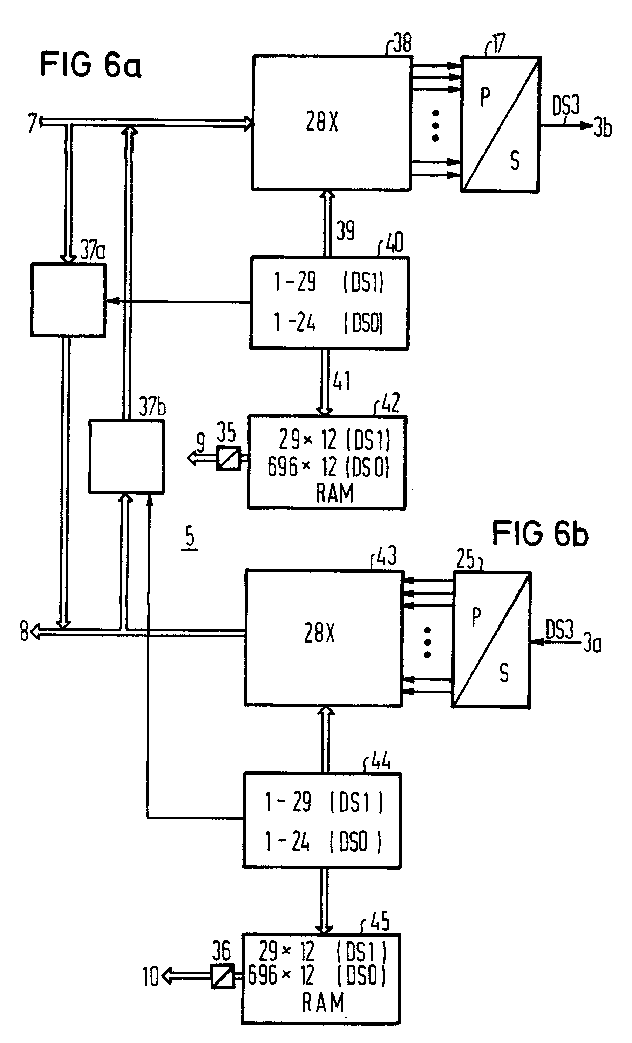

Bei der Erläuterung der Figuren 6a und 6b wird nochmals auf die Figur 2 zurückgekommen.

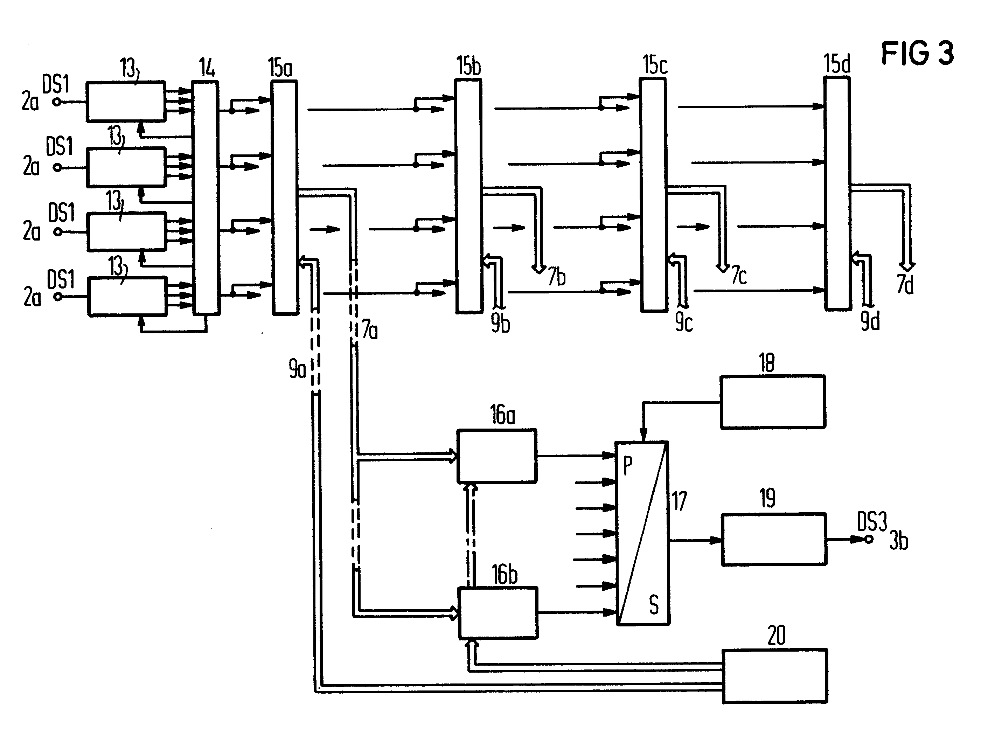

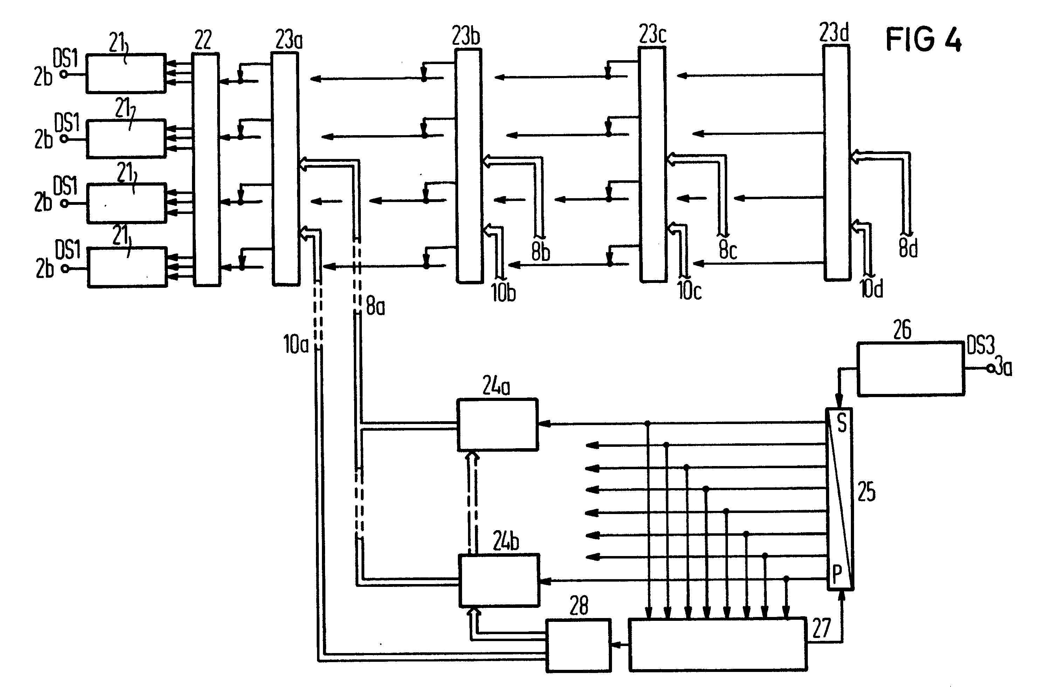

Die Figuren 3 und 4 zeigen die Busverbindungen zwischen einer Leitungsanschlußeinheit 4 für niedrige Bitrate und einer von vier Leitungsanschlußeinheiten 5 für hohe Bitrate. In Figur 3 werden vier DS1-Signale in ein DS3-Signal umgesetzt. In Figur 4 ist die Rückumsetzung dargestellt.

Die Anordnung nach Figur 3 enthält die Eingangsanschlüsse 2a für niedrige Bitrate, Schnittstellen 13 für niedrige Bitrate, eine Decodier- und Überwachungsschaltung 14, Busanschalteeinrichtungen 15a bis 15d, Eingangsspeicher 16a und 16b, einen Parallel-Seriell-Umsetzer 17, einen DS3-Rahmenbildner 18, eine Schnittstelle 19 für hohe Bitrate, einen Ausgangsanschluß 3b, eine Buskontrollschaltung 20, Sendebus-Datenleitungen 7a bis 7d und Sendebus-Adressenleitungen 9a-9d.

Die DS1-Signale gelangen über die Schnittstellen 13 und die Decodier- und Überwachungsschaltung 14 zu den Busanschalteeinrichtungen 15a - 15d. Von diesen reagiert jede auf eine Ursprungsadresse, die sie auf der zugehörigen Sendebus-Adressenleitung 9a, 9b, 9c oder 9d erhält, und liefert eine 8-bit-Gruppe - einen 8-bit-Abtastwert oder ein Datenbyte - an die ihr zugeordnete Sendebus-Datenleitung 7a, 7b, 7c oder 7d. Die Buskontrollschaltung 20, die die Adressen für eine Leitungsanschlußeinheit 5 für hohe Bitrate erzeugt, benennt auch einen der Eingangsspeicher 16a oder 16b für einen Empfang des Abtastwertes. Sowie dort Daten gesammelt werden, werden sie durch den Parallel-Seriell-Umsetzer und Multiplexer 17 verfügbar gemacht, was durch den DS3-Rahmenbildner 18 kontrolliert wird. Vom Parallel-Seriell-Umsetzer und Multiplexer 17 wird das Signal über die Schnittstelle 19 dem Ausgangsanschluß 3b zugeführt.

Die Anordnung nach Figur 4 enthält Ausgangsanschlüsse 2b, Schnittstellen 21 für niedrige Bitrate, einen Phasendiskriminator und Codierer 22, Busanschalteeinrichtungen 23a bis 23d, Busschnittstellen und Pufferschaltungen 24a und 24b, einen Seriell-Parallel-Umsetzer und Demultiplexer 25, eine Schnittstelle 26 für hohe Bitrate, einen Eingangsanschluß 3a, eine DS3-Synchronisierschaltung 27, eine Buskontrollschaltung 28, Empfangsbus-Datenleitungen 8a bis 8d und Empfangsbus-Adressenleitungen 10a bis 10d.

Ein am Eingangsanschluß 3a anliegendes DS3-Signal gelangt über die Schnittstelle 26 zum Seriell-Parallel-Umsetzer und Demultiplexer 25. Dieser liefert Signale an die DS3-Synchronisierschaltung 27, die den Parallel-Seriell-Umsetzer und Demultiplexer 25 auf den Rahmen des DS3-Signals synchronisiert. Die zeitlich durch die DS3-Synchronisierschaltung 27 eingestellte Buskontrollschaltung 28 steuert die Übertragung der 8-bit-Gruppen durch die Busschnittstellen und Pufferschaltungen 24a und 24b auf die Empfangsbus-Datenleitungen 8a bis 8d. Gleichzeitig liefert die Buskontrollschaltung 28 an die Busanschalteeinrichtungen 23a bis 23d eine Zieladresse für die Leitungsanschlußeinheiten 4. Durch diese wird bewirkt, daß die jeweilige 8-bit-Gruppe den passenden DS1-Ausgangsanschluß 2b erreicht. Dabei passiert die 8-bit-Gruppe den Phasendiskriminator und Codierer 22 und eine Schnittstelle 21.

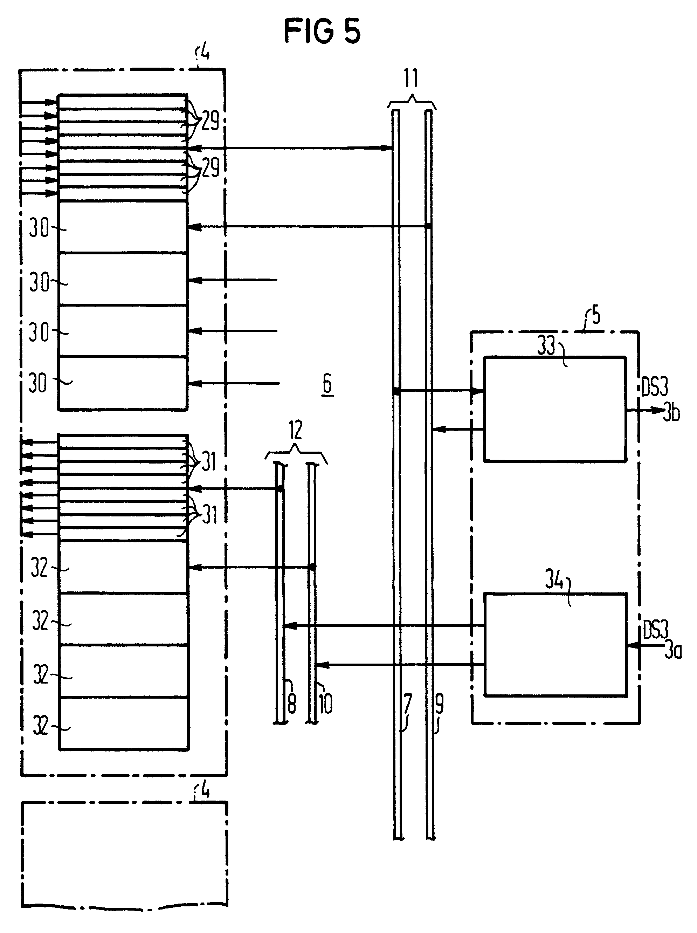

Figur 5 ist ein Blockdiagramm, das darstellt, wie eine Leitungseinheit 4 für niedrige Bitrate und eine Leitungsanschlußeinheit 5 für hohe Bitrate über das Bussystem 6 verbunden sind. Wie bereits erwähnt, gibt es vier getrennte Sende-Busleitungen 11, von denen jede Sendebus-Datenleitungen 7 und Sendebus-Adressenleitungen 9 enthält, und vier getrennte Empfangs-Busleitungen 12, von denen jede Empfangsbus-Datenleitungen 8 und Empfangsbus-Adressenleitungen 10 umfaßt. Jede Leitungsanschlußeinheit 5 ist an eine Sende-Busleitung 11 und eine Empfangs-Busleitung 12 angeschlossen. Jede Leitungsanschlußeinheit 4 ist andererseits an alle Sende-Busleitungen 11 und an alle Empfangs-Busleitungen 12 angeschlossen. Empfangene 8-bit-Gruppen eines DS1-Signals werden in den Pufferspeicher 29 eingespeist, von denen aus sie zu bestimmten Zeiten an die Sendebus-Datenleitungen 7 abgegeben werden, nachdem sie durch vom Adressen-Decoder 30 empfangene Zieladressen ausgewählt wurden. Ähnlich werden von der Leitungsanschlußeinheit 5 empfangene 8-bit-Gruppen in Pufferspeicher 31 der Leitungsanschlußeinheit 4 in Reaktion auf die von den Adressen-Decodern 32 empfangenen Zieladressen eingegeben.

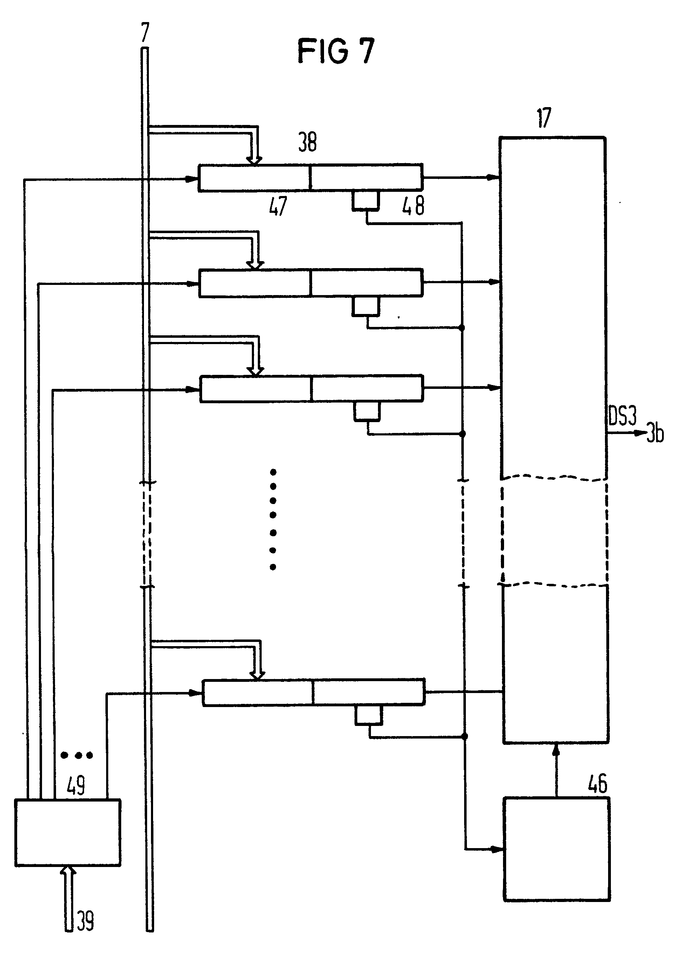

Die Figuren 6 und 7 zeigen die Wirkungsweise der Leitungsanschlußeinheiten 5. Die Figur 6a zeigt, wie 8-bit-Gruppen von der Sendebus-Datenleitung 7 zum Ausgangsanschluß 3b laufen. Figur 6b zeigt, wie 8-bit-Gruppen vom Eingangsanschluß 3a zur Empfangsbus-Datenleitung 8 gelangen.

Die Anordnung nach Figur 6a enthält einen Codeumsetzer 35, Zusatzspeicher 37a und 37b, achtundzwanzig Eingangsspeicher 38, einen Zähler 40, einen Kanalzuordnungsspeicher 42 und den Multiplexer und Parallel-Seriell-Umsetzer 17 mit Ausgangsanschluß 3b. Auf der Sendebus-Datenleitung 7 eintreffende 8-bit-Gruppen werden in Eingangsspeicher 38 aufeinanderfolgend eingespeist. Die Auswahl des jeweiligen Eingangsspeichers 38 erfolgt über einen ersten Ausgang 39 des Zählers 40. Eine der 8-bit-Gruppen wird nicht in einen der Eingangsspeicher 38, sondern in den Zusatzspeicher 37a eingegeben. Der Zähler 40 wählt so aufeinanderfolgend einen von achtundzwanzig DS1-Eingangsanschlüssen 2a für abgehende Übertragung zu dem DS3-Ausgangsanschluß 3b. Der neunundzwanzigste Zeitschlitz ermöglicht eine Verteilung, eine Überwachung sowie ein Abzweigen von 8-bit-Gruppen mittels des Zusatzspeichers 37a. Der Zähler 40 betätigt den Zusatzspeicher 37a für die Übertragung von 8-bit-Gruppen in diesen Zeitschlitz.

Im DS0-Betrieb enthält jede 8-bit-Gruppe ein Datenbyte eines 24-Kanal-PCM-Signals. Der Zähler 40 ist jetzt um einen (1 bis 24)-Zähler erweitert, der nach jedem Durchlauf des (1 bis 29)-Zählers weiterzählt.

Der zweite Ausgang 41 des Zählers 40 adressiert den Kanalzuordnungsspeicher 42 in dem 12-bit-Zieladressen auf neunundzwanzig Plätzen für DS1-Betrieb oder auf sechshundertsechsundneunzig Plätzen für DS0-Betrieb gespeichert sind. Nach Adressierung speist der Kanalzuordnungsspeicher 42 die ausgewählte Zieladresse in die Sendebus-Adressenleitung 9 ein.

Die 8-bit-Gruppen auf jeder Sendebus-Datenleitung 7 und jeder Empfangsbus-Datenleitung 8 - wie sie bereits in Figur 2 vorgestellt wurden - erfordern acht parallele Drähte. Jede 12-bit-Zieladresse wird für eine Übertragung vom Kanalzuordnungsspeicher 42 über die Sendebus-Adressenleitung 9 durch den Codeumsetzer 35 aufbereitet. In den Adressenleitungen 9 und 10 ist je eine von sechszehn Leitungen für eine Auswahl einer von sechszehn Leitungsanschlußeinheiten 4 vorgesehen. Drei weitere Leitungen identifizieren eine von acht Anschlüssen 2. Jede Leitungsanschlußeinheit 5 kann dann einen aus bis zu einhundertachtundzwanzig möglichen DS1-Plätzen adressieren.

Bei Übertragung der zugehörigen Zieladressen auf einer der Sendebus-Adressenleitungen 9 sind 8-bit-Gruppen eines bestimmten DS1-Signals (eines aus acht) der adressierten Leitungsanschlußeinheit 4 (einer aus sechzehn) an die Sendebus-Datenleitung 7 angelegt. Beim Senden der bestimmten Zieladresse auf einer der vier Sendebus-Adressenleitungen 9a bis 9d aktiviert in dem infragekommenden Zeitschlitz die Leitungsanschlußeinheit 5 die Übertragung der Zieladressen über die zugeordnete Sendebus-Datenleitung 7a, 7b, 7c oder 7d zu dem bestimmten Eingangsspeicher 38 der Leitungsanschlußeinheit 5.

Die Reihenfolge der Übertragung über das Bussystem 6 wird durch Einschreiben von Zieladressen in den Kanalzuordnungsspeicher 42 gesteuert. Die Inhalte von dessen Speicherplätzen werden regelmäßig für die Zeitdauer eines Zeitschlitzes über den Codeumsetzer 35 an die Sendebus-Adressenleitung 9 angelegt. So wird für jeden Zeitschlitz festgelegt, welche 8-bit-Gruppe von einer Leitungsanschlußeinheit 4 über die zugeordnete Sendebus-Datenleitung 7a, 7b, 7c oder 7d übertragen wird. Weil diese Sendebus-Datenleitung ständig einer bestimmten Leitungsanschlußeinheit 5 zugeteilt ist, bestimmen die Zieladressen in den Speicherplätzen die Ziel-Leitungsanschlußeinheit 5 und den Ausgangsanschluß 3b. Jede Sendebus-Daten-

EP 0 186 141 B1

leitung 7a bis 7d überträgt zeitverschachtelt wenigstens achtundzwanzig und vorzugsweise neunundzwanzig DS1-Signale. Die Taktfrequenz des Bussystems 6 muß infolgedessen wenigstens 1,544 MHz x 29 = 45 MHz betragen. Weil jedoch eine 8-bit-Gruppe über acht Leitungen parallel übertragen wird, beträgt die Taktfrequenz des Bussystems 6 nur etwa 6 MHz.

Ein DS1C-Signal wird in zwei DS1-Signale aufgeteilt und anschließend in der oben beschriebenen Art durchverbunden.

Die Anordnung in Figur 6b enthält einen Parallel-Seriell-Umsetzer und Demultiplexer 25 mit Eingangsanschluß 3a, achtundzwanzig Ausgangsspeicher 43, einen Zähler 44, einen Kanalzuordnungsspeicher 45, einen Zusatzspeicher 37b und einen Codeumsetzer 36.

Ein an den Eingangsanschluß 3a angelegtes DS3-Signal wird im Parallel-Seriell-Umsetzer und Demultiplexer 25 zerlegt und den Ausgangsspeichern 43 zugeführt. Diese werden durch den Zähler 44 ausgewählt. Eine 8-bit-Gruppe wird nicht in einen der Ausgangsspeicher 43 sondern in den Zusatzspeicher 37b eingegeben. Der Zähler 44 wählt so aufeinanderfolgend einen von achtundzwanzig DS1-Ausgangsanschlüssen 2b für abgehende Übertragung. Bei DS0-Betrieb wählt der Zähler 44 dagegen aufeinanderfolgend einen von vierundzwanzig DS0-Kanälen. Die Ausgangsspeicher 43 speisen die Empfangsbus-Datenleitung 8 und der Kanalzuordnungsspeicher 45 die Empfangsbus-Adressenleitung 10.

Figur 7 zeigt deutlicher als Figur 6a, wie jeder DS3-Rahmen durch den Parallel-Seriell-Umsetzer und Multipexer 17 erzeugt wird. Dieser empfängt 8-bit-Gruppen der Eingangsspeicher 38 und fügt hintereinander die einzelnen Bits der 8-bit-Gruppen, gesteuert durch die DS3-Rahmensynchronisierschaltung 46 in einen DS3-Rahmen. Jeder der Eingangsspeicher 38 besteht aus zwei Abschnitten: Einer Eingangskippstufe 47 (latch), die durch ein Signal von einem Decoder 49 aktiviert wird, und einer Ausgangskippstufe 48 (latch). Er verhält sich wie ein Pufferspeicher, wie er in konventionellen Multiplexern Verwendung findet.

Der Teil der Leitungsanschlußeinheiten 4, welcher für die ankommenden DS3-Signale gemäß Figur 6b zuständig ist, ist im Prinzip identisch und arbeitet in umgekehrter Weise auf den abgehenden gerade beschriebenen Teil.

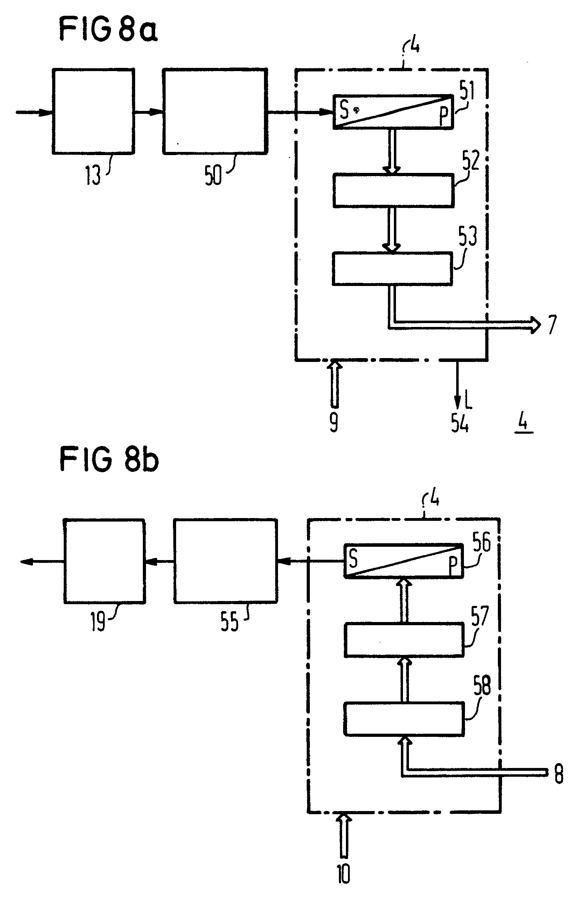

Die Figuren 8a und 8b zeigen die Arbeitsweise einer Leitungsanschlußeinheit 4.

Wie Figur 8a zeigt, empfängt die Leitungsanschlußeinheit 4 mit Hilfe der Sendebus-Adressenleitung 9 eine Zieladresse. Diese veranlaßt die Leitungsanschlußeinheit 4, eine 8-bit-Gruppe auf die Sendebus-Datenleitung 7 zu geben. Diese 8-bit-Gruppe ist eine parallele Darstellung der seriellen DS1-Daten, die in die Leitungsanschlußeinheit 4 durch die Schnittstelle 13 gelangen. Im DS0-Betrieb identifiziert ein DS1-Demultiplexer 50 die einzelnen DS0-Bytes (8 bit) im DS1-Signal. Da der Leitungsanschlußeinheit 5 öfters eine Zieladresse präsentiert wird als DS0-Bytes von der Leitungsanschlußeinheit 4 verfügbar sind, muß eine "Pufferspeicher-Leer"-Anzeige L die Leitungsanschlußeinheit 5 über die Gültigkeit der Daten auf der Sendebus-Datenleitung 7 auf dem laufenden halten.

Wie Figur 8b zeigt, ist die Struktur der Leitungsanschlußeinheit 4 in Empfangsrichtung komplementär. Die Leitungsanschlußeinheit 4 enthält einen Parallel-Seriellumsetzer 56, Pufferspeicher 57 und 58, im DS0-Betrieb zusätzlich einen Multiplexer 55 und eine Schnittstelle 19.

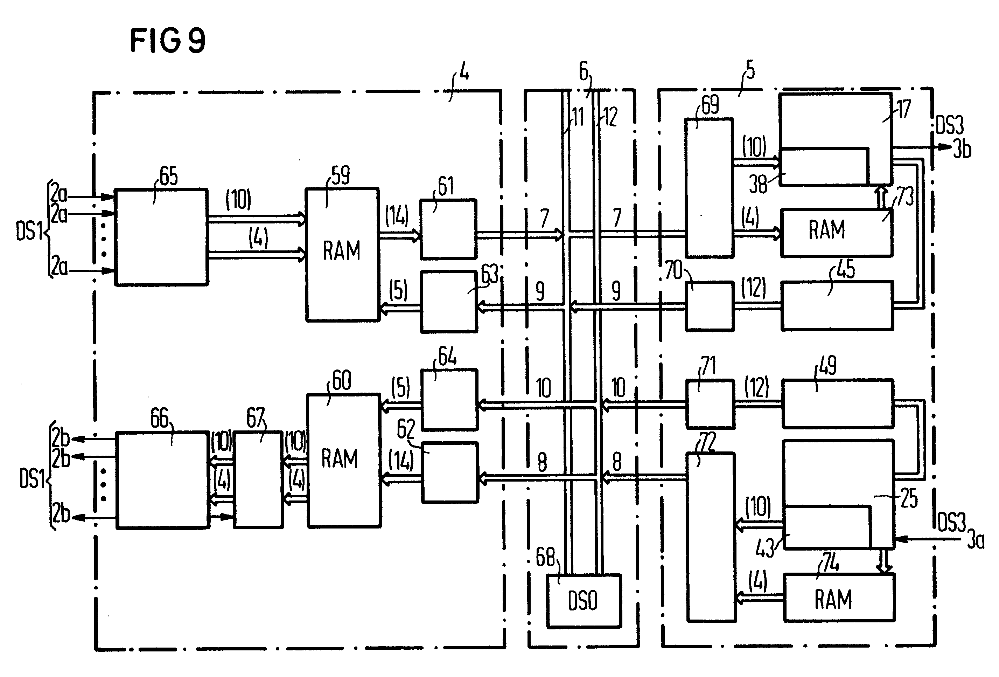

Figur 9 zeigt ein erfindungsgemäßes Muldex mit einer Leitungsanschlußeinheit 4 für niedrige Bitrate, mit einem Bussystem 6 für DS0-Betrieb und mit einer Leitungsanschlußeinheit 5 für hohe Bitrate.

Die Leitungsanschlußeinheit 4 enthält in Senderichtung acht DS1-Demultiplexer und Seriell-Parallel-Umsetzer 65, von denen nur einer gezeigt ist, einen adressierbaren Schreib-Lese-Speicher 59, eine Datenbus-Schnittstelle oder Datenbus-Treiber 61 sowie einen Adressenbus-Empfänger 63 und in Empfangsrichtung einen Datenbus-Empfänger 62, einen Adressenbus-Empfänger 64, einen adressierbaren Schreib-Lese-Speicher 60, eine logische Schaltung 67 und acht DS1-Multiplexer und Parallel-Seriell-Umsetzer 66, von denen nur einer gezeigt ist.

Die Leitungsanschlußeinheit 5 enthält einen Parallel-Seriell-Umsetzer und Multiplexer 17, Eingangsspeicher 38, adressierbare Schreib-Lese-Speicher 73 und 74, einen Busempfänger 69, Bustreiber 70 bis 72, Kanalzuordnungsspeicher 42 und 45, Seriell-Parallel-Umsetzer und Demultiplexer 25 und Ausgangsspeicher 43. Die Eingangsspeicher 38 und die Ausgangsspeicher 43 vermögen sechshundertzweiundsiebzig DS0-Kanal-Datenwerte zu speichern.

Die Leitungsanschlußeinheit 4 wurde bereits anhand der Figuren 8a und 8b und die Leitungsanschlußeinheit 5 anhand der Figuren 6a und 6b näher erläutert. In Klammern gesetzte Zahlen geben die Anzahl paralleler Drähte an. Die Leitungsanschlußeinheit 4 enthält in den adressierbaren Schreib-Lese-Speicher 59 zusätzlich zum bereits empfohlenen Pufferspeicher mit ausreichender elastischer Speicherkapazität zum Speichern von Abtastwerten aus allen gedemultiplexten DS0-Kanälen von allen acht DS1-Demultiplexern und Seriell-Parallel-Umsetzern 65 oder sonstigen DS0-Anschlüssen.

Zur Erläuterung der Prinzipien der vorliegenden Erfindung werden nachfolgend einzelne hypothetische Situationen diskutiert. Zuerst wird die Selektion eines DS0-Kanals in einer Leitungsanschlußeinheit 4

6

besprochen. Diese ist derart gestaltet, daß der selektierte DS0-Kanal durchgeschaltet und in einen bestimmten Zeitschlitz am Ausgangsanschluß 3b gemultiplext wird.

Anschließend wird der DS0-Kanal-Empfang diskutiert, der zu einem abgehenden DS0-Kanal in demselben DS1-Signal oder einem anderen DS1-Signal rückübertragen wird. Es wird dabei angenommen, daß die gezeigte DS1-Multiplexer/Demultiplexer-Kombination derselben DS1-Leitung zugeordnet ist.

In dem DS0/DS3-Beispiel hat in der Senderichtung die Leitungsanschlußeinheit 5 in ihrem Kanalzuordnungsspeicher 42 eine Adresse gespeichert, die einem bestimmten DS0-Kanal (beispielsweise einem von vierundzwanzig) in einem bestimmten DS1-Signal in der Leitungsanschlußeinheit 4 zugeordnet ist. Ferner ist die Leitungsanschlußeinheit 5 vorprogrammiert, um Daten von den Eingangsspeichern 38 derart zu übergeben, daß der in einem bestimmten Zeitschlitz des Bussystems 6 adressierte DS0-Kanal in bestimmte Zeitschlitze des DS3-Signals am Ausgangsanschluß 3b eingefügt wird.

Während der in Figur 6a gezeigte Zähler 40 durch die Kanäle und damit durch die des DS3-Signals zugeordneten Zieladressen läuft, zählt er schließlich bis zu der Zieladresse im Kanalzuordnungsspeicher 42 von dem betrachteten DS0-Kanal des betrachten DS1-Signals. Die 12-bit-Zieladresse wird im wesentlichen zur Sendebus-Adressenleitung 9 über den Bustreiber 70 gegeben. Während sie zu allen Leitungsanschlußeinheiten 4 gesendet wird, läßt lediglich eine vorgewählte Leitungsanschlußeinheit 4 die übertragene Adresse zum Adressenbusempfänger 63 durch. Dazu wählen 4 bit eine von sechzehn Leitungsanschlußeinheiten 4, was mit Hilfe einer nicht gezeigten Baugruppen-Auswahlleitung durchgeführt wird. Ein bestimmtes DS1-Signal wird aus acht DS1-Signalen (von vierundzwanzig DS0-Kanälen) durch weitere 3 bit einer Information identifiziert. Weitere 5 bit werden verwendet, um einen DS0-Kanal aus einem bestimmten DS1-Signal auszuwählen.

Der DS1-Demultiplexer in 65 zerlegt kontinuierlich einen seriellen Datenstrom in seine vierundzwanzig DS0-Datenbytes. Der Seriell-Parallel-Umsetzer in 65 übernimmt dann deren Umsetzung in parallele DS0-Datenbytes und fügt ein Paritätsbit und ein Stopfbit hinzu. Die vierundzwanzig DS0-Datenbytes mit den Paritätsbits und Stopfbits werden in aufeinanderfolgenden Adressenplätzen im adressierbaren Schreib-Lese-Speicher 64 gespeichert.

Zur selben Zeit, während der der serielle Datenstrom zerlegt wird, werden vier Markierungsbits Sa,Sb,Sc und 5d, die den sechsten, zwölften, achtzehnten und vierundzwanzigsten Rahmen des DS1-Signals anzeigen, zum adressierbaren Schreib-Lese-Speicher 64 für eine erweiterte Überrahmenbildung (extended frame) übertragen. Insgesamt kann die parallele Datenübertragung für einen bestimmten DS0-Kanal 14 bit enthalten: 8 bit repräsentieren ein DS0-Datenbyte, 4 bit Markierungsbits Sa, Sb, Sc und Sd für den erweiterten Überrahmenbetrieb, 1 bit ein Paritätsbit und 1 bit ein Stopfbit.

Bei Adressierung über die Sendebus-Adressenleitung 9 sendet ein bestimmter Speicherplatz für DS0-Signale die 14 bit parallel zur Busschnittstelle oder Datenbustreiber 61.

Der Datenbustreiber 61 gibt während eines Zeitschlitzes des Bussystems 6 14-bit-Daten ab, die vom Bussystem 6 übertragen werden. Diese Daten werden während des obengenannten Zeitschlitzes vom Busempfänger 69 der Sendebus-Datenleitung 7 erwartet. Wenn der Busempfänger 69 diese 14 bit parallel empfängt, werden die 10 bit der Daten einschließlich des Paritätsbits und des Stopfbits durch die Eingangsspeicher 38 parallel zum Parallel-Seriell-Umsetzer in 17 und seriell zum Multiplexer in 17 geliefert. A-, B-, C-und D-Signalisierungsbits (vermittlungstechnische Kennzeichen) in den durch die Markierungsbits Sa, Sb, Sc und Sd markierten DS0-Bytes werden extrahiert und in den adressierbaren Schreib-Lese-Speicher 73 für eine zeitweilige Speicherung zur Ausgabe in den sechsten, zwölften, achtzehnten und vierundzwanzigsten Rahmen der seriellen Datenübertragung geliefert.

In Empfangsrichtung am Eingangsanschluß 3a empfangene serielle Daten eines DS3-Signals werden vom Demultiplexer in 25 empfangen. Der Seriell-Parallel-Umsetzer in 25 extrahiert die DS0-Datenbytes und liefert diese sowie das Paritätsbit und das Stopfbit über die Ausgangsspeicher 43 zum Bustreiber 72. Die A-, B-, C-und D-Signalisierungsbits der sechsten, zwölften, achzehnten und vierundzwanzigsten Rahmen werden zu einem A-, B-, C- und D-Speicherplatz im adressierbaren Schreib-Lese-Speicher 74 zur zeitweiligen Speicherung geliefert. Der Bustreiber 72 liefert das kombinierte 14-bit-Signal parallel zur Empfangsbus-Datenleitung 8. Eine 12-bit-Zieladresse wird vom Kanalzuordnungsspeicher 45 über den Bustreiber 71 auf die Empfangsbus-Adressenleitung 10 und auf die bereits erwähnte individuelle Baugruppen-Auswahlleitung gleichzeitig mit den vierzehn Datenbits gesendet, die durch den Adressenbus-Empfänger 64 und den Datenbus-Empfänger 62 empfangen werden. Die Zieladressendaten identifizieren genau, für welchen DS0-Kanal der DS1-Leitung die Daten bestimmt sind. Diese werden in den individuell adressierten Speicherplatz des adressierbaren Schreib-Lese-Speichers 69 geladen.

Der adressierbare Schreib-Lese-Speicher 60 gibt die zehn Datenbits und die A-, B-, C- und D-Signalisierungsbits parallel ab, wenn ein nicht gezeigter kontinuierlich fortlaufender Zähler in der Leitungsanschlußeinheit 4 diese Adresse erreicht. Sie werden zuerst zur Logikschaltung 67 geleitet, deren Betrieb durch den DS1-Multiplexer in 66 kontrolliert wird. Dieser signalisiert der Logikschaltung 67, wenn die A-, B-, C- und D-Signalisierungsbits in den sechsten, zwölften, achzehnten und vierundzwanzigsten Rahmen am Eingang des Parallel-Seriell-Umsetzers in 66 einzufügen sind. Zuletzt wird der DS0-Datenwert in den vorausgewählten einen von vierundzwanzig DS0-Kanalausgängen des DS1-Multiplexers in 66 geliefert.

So wurde ein Mittel zum Anschließen von beispielsweise DS0-Kanal Nr. 8 aus vierundzwanzig Kanälen in einem einzelnen DS1-Signal dargestellt. Daten dieses Kanals sind im dargestellten Beispiel durchgeschaltet und gemultiplext, beispielsweise zum DS0-Kanal Nr. 97 aus sechshundertzweiundsiebzig Kanälen eines einzelnen DS3-signals.

Jetzt wird die Durchschaltung in der DS0-Ebene für den Fall beschrieben, daß die Durchschaltung in demselben oder einem anderen DS1-Signal bewirkt wird. Zum Beispiel kann der Kanal Nr. 8 aus vierundzwanzig Kanälen in einem DS1-Signal mit dem Kanal Nr. 3 aus vierundzwanzig Kanälen desselben oder eines anderen DS1-Signals verbunden werden. Es ist wichtig zu erkennen, daß eine Kontrolle des Prozesses über eine Leitungsanschlußeinheit 5 erfolgt. Die Kanäle in der Richtung von Kanal Nr. 3 zum Kanal Nr. 8 und umgekehrt werden durch 12-bit-Zieladressen kontrolliert, die durch die Leitungsanschlußeinheit 5 ausgesendet werden.

Für eine Übertragung zwischen verschiedenen DS1-Signalen werden die Daten über die Sendebus-Datenleitung 7 zur Leitungsanschlußeinheit 5 übertragen, in dem Zusatzspeichern 37a in den Figuren 6a und 6b gespeichert und zur Leitungsanschlußheit 4 in insgesamt zwei Adressen-/Datenübertragungszyklen zurückübertragen.

In dem Muldex nach Figur 9 können unter der Kontrolle der Leitungsanschlußeinheit 5 in Übereinstimmung mit der vorangegangenen Diskussion folgende besondere Funktionen ausgeführt werden: Eine sogenannte Überwachungsfunktion, eine sogenannte Verteilfunktion und eine sogenannte Abzweigfunktion.

In der Überwachungsfunktion ist insbesondere einer der neunundzwanzig DS1-Sende- und Empfangsbuszeitschlitze auf entweder der Sendebus-Datenleitung 7 oder der Empfangsbus-Datenleitung 8 zu einer vorbestimmten Leitungsanschlußeinheit 4 für Überwachung, Test oder andere Zwecke leitbar.

In der Verteilfunktion kann ein von irgendeiner Leitungsanschlußeinheit 4 kommendes Signal in irgendeinen der neunundzwanzig DS1-Zeitschlitze eingesetzt werden.

In der Abzweigfunktion können DS1-Daten von einem Seriell-Parallel-Umsetzer in 25 direkt zu dem Parallel-Seriell-Umsetzer in 17 umgeleitet werden.

Die Folge der gesamten Datenübertragung ist durch die in den Kanalzuordnungsspeichern 42 und 45 eingespeicherten Zieladressen bestimmt.

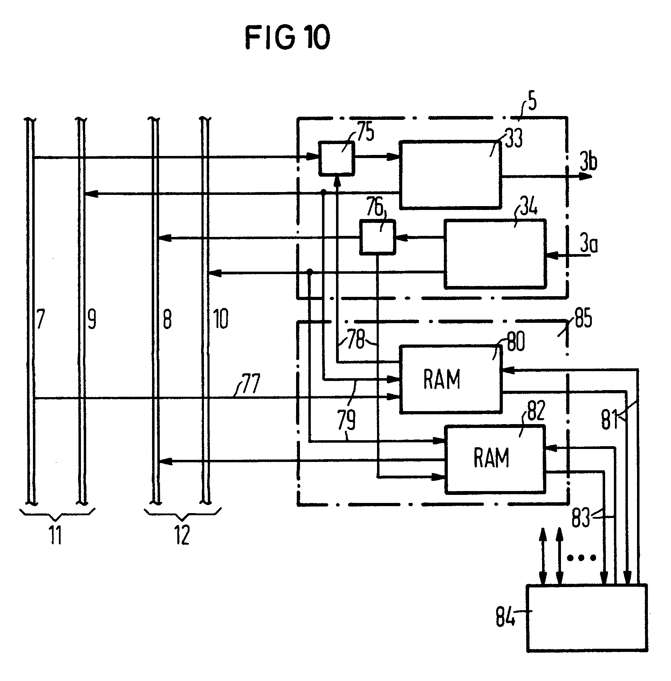

Mit Bezug auf die Figuren 10 und 11 wird weiter vorgeschlagen, die vorliegende Erfindung in Einschübe zu unterteilen. Jede einzelne Komponente, jeder Baustein oder jede Baueinheit kann mittels CMOS-Technologie ausgeführt werden. Beispielsweise kann eine Leitungsanschlußeinheit 4 für niedrige Bitrate ohne DS0-Betrieb aus lediglich zwei integrierten Schaltungschips für jedes DS1-Signal aufgebaut werden: einer für Parallel-Seriell- und Seriell-Parallel-Umsetzung, der andere für Coder-/Decoder-Funktionen und die Überwachung. Die Leitungsanschlußeinheit 5 für hohe Bitrate kann aus zwei fundamentaleren Bausteinchips bestehen, während eine Baugruppe niederer Bitrate bei DS0-Betrieb eine abweichende Gestaltung erfordert, aber aus einem ähnlichen Paar von Bausteinchips aufgebaut werden kann.

Figur 11 zeigt einen Geräterahmen 86 für die Aufnahme mehrerer erfindungsgemäßer Muldex. Im Geräterahmen 86 sind eine Betriebsstromversorgung 87, eine Reservestromversorgung 88, den Anschlüssen 2 und 3 vorgeschaltete Schutzrelais 92 und eine Leiterplatte an der Rückseite des Geräterahmens 86 eingebaut. Weiter enthält der Geräterahmen 86 Einschubfassungen, in die Einschübe einführbar sind, die über Steckverbindungen Kontakt zur Leiterplatte haben, auf der unter anderem das Bussystem 6 angeordnet ist. In die Einschubfassungen werden zuerst die zu einem Muldex gehörenden Einschübe 90 mit Leitungsanschlußeinheiten 4, Einschübe 89 mit Leitungsanschlußeinheiten 5 und Meßeinschübe 91 eingesteckt. In die noch freien Einschubfassungen können jeweils assoziiert mit einem Einschub 89 Buserweiterungs-Baugruppe 85 eingesteckt werden.

Figur 10 zeigt, daß für eine Zusammenarbeit von mehr als vier Muldex zu jeder Leitungsanschlußeinheit 5 eine Buserweiterungs-Baugruppe 85 gebraucht wird. Diese enthält einen DS3-Sender-Erweiterungsteil 80 in Form eines adressierbaren Schreib-Lese-Speichers und einen DS3-Empfänger-Erweiterungsteil 82 ebenfalls in Form eines adressierbaren Schreib-Lese-Speichers, um eine Speicherung von Daten für zwei Übertragungsrichtungen einer Leitungsanschlußeinheit 5 zu ermöglichen. Jeder dieser adressierbaren Schreib-Lese-Speicher 80 und 82 dient zur Speicherung von sechshundertzweiundsiebzig DS0-Kanal-Datenwerten für jede Übertragungsrichtung. Ferner ist die Buserweiterungs-Baugruppe 85 durch die gezeigte Leitungsanschlußeinheit 5 direkt adressierbar. Die Buserweiterungs-Baugruppe 85 erweitert außerdem das Bussystem 6 zu anderen Muldex entweder über die Busmatrix-Kontrolleinrichtung 84 oder mit Hilfe direkter Verbindungen. Die Leiter 81 und 83 können für eine Komplettierung der Verbindungen

8

gebraucht werden. Auf diese Weise kann die Kapazität des beschriebenen Systems sehr erweitert und können seine Eigenschaften gesteigert werden. Im einzelnen umfaßt die Buserweiterungs-Baugruppe 85 einen Anschluß 77 zum Bussystem 6, Anschlüssen 78 zu einem Sender 75 und einen Empfänger 76 in der Leitungsanschlußeinheit 5 sowie Kontrolleitungsanschlüsse 79 von der kontrollierenden Leitungsanschlußeinheit 5.

In Figur 11 sind vier Buserweiterungs-Baugruppen 85 gezeigt, welche die vier Einschübe 89 mit Leitungsanschlußeinheiten 5 oder drei Einschübe 89 und einen Reserveeinschub 89 ergänzen.

Gemäß Figur 10 werden - bei normalerweise nicht erweitertem Überrahmenbetrieb - Daten von der Sendebus-Datenleitung 7 durch einen Sender 76 zum DS3-Sendeteil 33 und empfangene DS3-Daten über den Empfänger 76 zur Empfangsbus-Datenleitung 8 geleitet. Der Sender 75 bzw. der Empfänger 76 sind Zusammenfassungen der vorher im Detail beschriebenen Busannahme-, Datenspeicherungs-, Zähl- usw. Funktionen.

Im erweiterten Busbetrieb für mehr als vier Leitungsanschlußeinheiten 5 werden in der Senderichtung Daten von einer Leitungsanschlußeinheit 4 über die Sendebus-Datenleitung 7 in den adressierbaren Schreib-Lese-Speicher 80 eingeführt; in analoger Weise wie sie bei normalem Betrieb in die Leitungsanschlußeinheit 5 eingeführt werden. Die der Buserweiterungs-Baugruppe 85 zugeordnete Leitungsanschlußeinheit 5 wird dabei nicht tangiert, da das Ziel der Daten ein anderer Muldex ist. Die Busmatrix-Kontrolleinrichtung 84 überträgt die Daten zu dieser Einrichtung. Wenn Daten aus einem anderen Muldex für einen Ausgang der Leitungsanschlußeinheit 5 bestimmt sind, werden die Daten durch den DS3-Sende-Erweiterungsteil 80 über eine direkte Verbindung zum Sender 75 und zum DS3-Sendeteil 33 geleitet.

Im erweiterten Busbetrieb können die im DS3-Empfangsteil 34 empfangenen Daten, die normalerweise durch den Empfänger 76 zur Empfangsbus-Datenleitung 8 durchgeschaltet werden, jetzt durch eine direkte Verbindung zum DS3-Empfänger-Erweiterungsteil 82 und anschließend zur Busmatrix-Kontrolleinrichtung 84 weitergegeben werden. Im DS3-Empfänger-Erweiterungsteil 82 über die Leitung 83 empfangene Daten werden zur Empfangsbus-Datenleitung 8 ausgegeben. Eine Leitungsanschlußeinheit 4 vermag keinen Unterschied zwischen diesen Daten und den vom Empfänger 76 festzustellen.

**Patentansprüche**

1.  Muldex
    mit ersten Anschlüssen (2,2a,2b) für ankommende und abgehende Digitalsignale (DS0,DS1,DS1C,DS2,) niedriger Bitrate,
    mit zweiten Anschlüssen (3) für ankommende und abgehende Digitalsignale (DS3) hoher Bitrate,
    mit einem zwischen den ersten und den zweiten Anschlüssen (2,3) angeordneten Multiplexer/Demultiplexer (17; 25),
    mit ersten Schnittstellen (13,21) zwischen den ersten Anschlüssen (2,2a,2b) und den Anschlüssen niederer Bitrate des Multiplexer/Demultiplexers (17; 25) und
    mit zweiten Schnittstellen (19,26) zwischen den Anschlüssen hoher Bitrate des Multiplexers/Demultiplexers (17,25) und den zweiten Anschlüssen (3,3a,3b),
    **dadurch gekennzeichnet,**
    daß zwischen den ersten Schnittstellen (13,21) und dem Multiplexer/Demultiplexer (17; 25) ein Koppelfeld (7,7a-7d, 8,8a-8d,9,9a-9d,10,10a-10d,14,15a-15d,16a,16b,22,23a-23d, 24a, 24b) mit einer Koppelfeldsteuerung (20,28) für eine Kanalverteilung vorgesehen sind.

2.  Muldex nach Anspruch 1,
    **dadurch gekennzeichnet,**
    daß Sendebus-Datenleitungen (7,7a,7b), Empfangsbus-Datenleitungen (8,8a-8d), Sendebus-Adressenleitungen (9,9a-9d), Empfangsbus-Adressenleitungen (10,10a-10d) und Busanschlußeinrichtungen (15a-15d,23a-23d) mit Speicher (16a,16b,24a,24b,52,53,57,58) und Speichersteuerung in Form eines Adressenbusempfängers (63,64) vorgesehen sind.

3.  Muldex nach Anspruch 2,
    **dadurch gekennzeichnet,**
    daß in den ersten Busanschlußeinrichtungen (15a-15d) ein Demultiplexer und Seriell-Parallel-Umsetzer (51,52,65) und ein diesem nachgeschalteter erster adressierbarer Schreib-Lese-Speicher (52,53,59) zur Aufnahme von Daten aus einem Digitalsignal (DS0,DS1,DS1C,DS2) niederer Bitrate und von Adressen vorgesehen sind und
    daß in den zweiten Busanschlußeinrichtungen (23a-23d) ein zweiter adressierbarer Schreib-Lese-Speicher (57,58,60) zur Aufnahme von Daten aus einem Digitalsignal (DS3) hoher Bitrate und von Adressen und ein diesem nachgeschalteter Multiplexer und Parallel-Seriell-Umsetzer (50,51,66) vorgesehen sind.

4. Muldex nach Anspruch 3,
**dadurch gekennzeichnet,**
daß im ersten adressierbaren Schreib-Lese-Speicher (52,53,59) eine bestimmte Adresse wenigstens ein bestimmtes Byte aus einem bestimmten Zeitkanal enthält und daß im zweiten adressierbaren Schreib-Lese-Speicher (57,58,60) ein bestimmtes Byte für eine Übertragung zu einem bestimmten Zeitkanal gemäß der Adressensignalisierung bereitgestellt wird.

5. Muldex nach Anspruch 3 oder 4,
**dadurch gekennzeichnet,**
daß in den ersten Busanschlußeinrichtungen (15a-15d) ein Bustreiber (61) an den Sendebus-Datenleitungen (7a-7d) und ein erster Adressenbusempfänger (63) vorgesehen sind und
daß in den zweiten Busanschlußeinrichtungen (23a-23d) ein zweiter Adressenbusempfänger (64) und ein Datenbusempfänger (62) vorgesehen sind, der Bytes in den zweiten adressierbaren Schreib-Lese-Speicher (60) in Plätze einspeist, die vom zweiten Adressenbusempfänger (64) angegeben wurden.

6. Muldex nach einem der Ansprüche 3 bis 5,
**dadurch gekennzeichnet,**
daß in der zweiten Busanschlußeinrichtung (23a-23d) zwischen dem zweiten adressierbaren Schreib-Lese-Speicher (60) und dem Multiplexer und Parallel-Seriell-Umsetzer (66) eine logische Schaltung (67) vorgesehen ist, die einem rahmensynchronen Einsetzen von Signalisierungsbits in den Datenstrom dient.

7. Muldex nach einem der vorhergehenden Ansprüche,
**dadurch gekennzeichnet,**
daß ein Geräterahmen (86) für Einschübe vorgesehen ist, daß an der Geräterückwand eine Leiterplatte mit wenigstens Sende- und Empfangsbusleitungen (11,12) vorgesehen ist und
daß Steckverbindungen zur elektrischen und mechanischen Verbindung der Einschübe mit der Leiterplatte vorgesehen sind.

8. Muldex nach Anspruch 7,
**dadurch gekennzeichnet,**
daß der Geräterahmen (86) für die Aufnahme mehrerer Muldex vorgesehen ist,
daß jede Leitungsanschlußeinheit (5) eine Buserweiterungs-Baugruppe (85) zugeordnet ist,
daß in der Buserweiterungs-Baugruppe (85) ein mit der Sendebus-Datenleitung (7) und der Sendebus-Adressenleitung (9) verbundener Sender-Erweiterungsteil (80) für hohe Bitrate vorgesehen ist,
daß in der Buserweiterungs-Baugruppe (85) ein mit der Empfangsbus-Datenleitung (8) und der Empfangsbus-Adressenleitung (10) verbundener Empfänger-Erweiterungsteil (82) für hohe Bitrate vorgesehen ist,
daß eine mit dem Sender-Erweiterungsteil (80) und dem Empfänger-Erweiterungsteil (82) verbundene Busmatrix-Kontrolleinrichtung (84) vorgesehen ist und
daß Schalter vorgesehen sind, über die die Busmatrix-Kontrollschaltung (84) die Zuleitungen zu den Sende- und Empfangsbusleitungen (11,12) schließen oder öffnen kann.

## Claims

1. Multiplexer/demultiplexer with first connections (2, 2a, 2b) for incoming and outgoing low-bit-rate digital signals (DS0, DS1, DS1C, DS2), with two connections (3) for incoming and outgoing high-bit-rate digital signals (DS3), with a multiplexer/demultiplexer (17; 25) arranged between the first and the second connections (2, 3), with first interfaces (13, 21) between the first connections (2, 2a, 2b) and the low-bit-rate connections of the multiplexer/demultiplexer (17; 25) and with second interfaces (19, 26) between the high-bit-rate connections of the multiplexer/demultiplexer (17, 25) and the second connections (3, 3a, 3b), characterised in that, between the first interfaces (13, 21) and the multiplexer/ demultiplexer (17; 25), a switching network (7, 7a-7d, 8, 8a-8d, 9, 9a-9d, 10, 10a-10d, 14, 15a-15d, 16a, 16b, 22, 23a-23d, 24a, 24b) with a switching network controller (20, 28) for channel distribution is provided.

2. Multiplexer/demultiplexer according to Claim 1, characterised in that transmitting bus data lines (7, 7a, 7b), receiving bus data lines (8, 8a-8d), transmitting bus address lines (9, 9a-9d), receiving bus address lines (10, 10a-10d) and bus access devices (15a-15d, 23a-23d) with memory (16a, 16b, 24a, 24b, 52, 53, 57, 58) and memory control in the form of an address bus receiver (63, 64) are provided.

3. Multiplexer/demultiplexer according to Claim 2, characterised in that, in the first bus access devices (15a-15d), a demultiplexer and serial/parallel converter (51, 52, 65) and a first addressable random-access memory (52, 53, 59), which follows this converter, are provided for receiving data from a low-bit-rate digital signal (DS0, DS1, DS1C, DS2) and addresses, and in that, in the second bus access devices (23a-23d), a second addressable random-access memory (57, 58, 60) for receiving data from a high-bit-rate digital signal (DS3) and addresses, and a multiplexer, following this memory, and parallel/serial converter (50, 51, 66) are provided.

4. Multiplexer/demultiplexer according to Claim 3, characterised in that in the first addressable randomaccess memory (52, 53, 59), a particular address contains at least one particular byte from a particular time slot, and in that in the second addressable random-access memory (57, 58, 60), a particular byte is provided for transmission in a particular time slot according to the address signalling.

5. Multiplexer/demultiplexer according to Claim 3 or 4, characterised in that a bus driver (61) for the transmitting bus data lines (7a-7d) and a first address bus receiver (63) are provided in the first bus access devices (15a-15d), and in that in the second bus access devices (23a-23d), a second address bus receiver (64) and a data bus receiver (62) which feeds bytes into the second addressable random-access memory (60) into spaces which were specified by the second address bus receiver (64) are provided.

6. Multiplexer/demultiplexer according to one of Claims 3 to 5, characterised in that a logic circuit (67), which is used for frame-synchronous insertion of signalling bits into the data stream, is provided in the second bus access device (23a-23d) between the second addressable random-access memory (60) and the multiplexer and parallel/serial converter (66).

7. Multiplexer/demultiplexer according to one of the preceding claims, characterised in that an equipment rack (86) for inserts is provided, in that a circuit board having at least transmitting and receiving bus lines (11, 12) is provided on the equipment back panel, and in that plug-in connections are provided for electrically and mechanically connecting the inserts to the circuit board.

8. Multiplexer/demultiplexer according to Claim 7, characterised in that the equipment rack (86) is provided for receiving several multiplexer/demultiplexers, in that a bus extension module (85) is allocated to each line access unit (5), in that a transmitter extension part (80) for the high bit-rate, which is connected to the transmitting bus data line (7) and to the transmitting bus address line (9), is provided in the bus extension module (85), in that a receiver extension part (82) for the high bit-rate, which is connected to the receiving bus data line (8) and to the receiving bus address line (10), is provided in the bus extension module (85), in that a bus matrix control device (84) connected to the transmitter extension part (80) and to the receiver extension part (82) is provided, and in that switches are provided via which the bus matrix control circuit (84) can close or open the feed lines to the transmitting and receiving bus lines (11, 12).

**Revendications**

1. Multiplexeur-démultiplexeur
comprenant des premières bornes (2,2a,2b) pour des signaux numériques d'arrivée et de départ (DS0, DS1, DS1C, DS2) présentant de faibles cadences binaires,
des secondes bornes (3) pour des signaux numériques d'arrivée et de départ (DS3) possédant une cadence binaire élevée,
un multiplexeur/démultiplexeur (17; 25) disposé entre les première et seconde bornes (2,3),
des premières interfaces (13,21) entre les premières bornes (2,2a,2b) et les bornes, qui transfèrent des cadences binaires plus faibles, du multiplexeur/ démultiplexeur (17;25), et
des secondes interfaces (19,26) entre les bornes, qui transfèrent des cadences binaires élevées, du multiplexeur/ démultiplexeur (17;25) et les secondes bornes (3,3a,3b),

caractérisé par le fait qu'entre les premières interfaces (13,21) et le multiplexeur/démultiplexeur (17;25), il est prévu un champ de couplage (7,7a-7d,8,8a-8d,9,9a-9d,10,10a-10d,14,15a-15d,16a,16b,22,23a-23d,24a,24b) comportant une unité (20,28) de commande du champ de couplage pour une répartition des canaux.

2. Multiplexeur-démultiplexeur suivant la revendication 1, caractérisé par le fait qu'il est prévu des lignes (7,7a,7b) de transmission de données formant bus d'émission, des lignes (8,8a-8d) de transmission de données formant bus de réception, des lignes (9,9a-9d) de transmission d'adresses formant bus d'émission, des lignes (10,10a-10d) de transmission d'adresses formant bus de réception et des dispositifs (15a-15d, 23a-23d) de raccordement de bus, comportant une mémoire (16a-16b, 24a-24b,52,53,57,58) et une unité de commande de mémoire sous la forme d'un récepteur (63,64) de bus de transmission d'adresses.

3. Multiplexeur-démultiplexeur suivant la revendication 2, caractérisé par le fait que dans les premiers dispositifs (15a-15d) de raccordement de bus, il est prévu un démultiplexeur et un convertisseur série-parallèle (51,52,65) et une première mémoire adressable d'enregistrement-lecture (52,53,59) branchée en aval de ce convertisseur et servant à recevoir des données formées d'un signal numérique (DS0,DS1,DS1C,DS2) présentant une faible cadence binaire et d'adresses, et que dans les seconds dispositifs de raccordement de bus (23a-23d), il est prévu une seconde mémoire adressable d'enregistrement-lecture (57,58,60) servant à recevoir des données formées d'un signal numérique (DS3) possédant une cadence binaire élevée et d'adresses et un multiplexeur et un convertisseur parallèle-série (50,51,66) branché en aval de cette mémoire.

4. Multiplexeur-démultiplexeur suivant la revendication 3, caractérisé par le fait que dans la première mémoire adressable d'enregistrement-lecture (52,53,59), une adresse déterminée contient au moins un octet déterminé provenant d'un canal temporel déterminé et que la seconde mémoire adressable d'enregistrement-lecture (57,58,60), est préparée pour une transmission à un canal temporel déterminé conformément à la signalisation d'adresses.

5. Multiplexeur-démultiplexeur suivant la revendication 3 ou 4, caractérisé par le fait qu il est prévu un étage d'attaque de bus (61) dans les lignes (7a-7d) de transmission de données du bus d'émission, et un premier récepteur (63) de bus de transmission d'adresses, et qu il est prévu, dans les seconds dispositifs de raccordement de bus (23a-23d), un second récepteur (64) de bus de transmission d'adresses et un récepteur (62) de bus de transmission de données, qui introduit des octets dans la seconde mémoire adressable d'enregistrement-lecture (60), en des emplacements qui ont été indiqués par le second récepteur (64) de bus de transmission d'adresses.

6. Multiplexeur-démultiplexeur suivant l'une des revendications 3 à 5, caractérisé par le fait que dans le second dispositif de raccordement de bus (23a-23d) est prévu, entre la seconde mémoire adressable d'enregistrement-lecture (60) du multiplexeur et le convertisseur parallèle-série (66), un circuit logique (67), qui sert à insérer, d'une manière synchrone du point de vue des trames, des bits de signalisation dans le flux de données.

7. Multiplexeur-démultiplexeur suivant l'une des revendications précédentes, caractérisé par le fait qu'il est prévu un cadre d'appareil (86) pour des tiroirs, que sur la paroi de l'appareil, il est prévu une plaquette à circuits imprimés comportant au moins des lignes formant bus d'émission et de réception (11,12), et que des liaisons à enfichage sont prévues pour établir une liaison électrique et mécanique des tiroirs avec la plaquette à circuits imprimés.

8. Multiplexeur-démultiplexeur suivant la revendication 7, caractérisé par le fait que le cadre (86) de l'appareil est prévu de manière à loger plusieurs multiplexeurs-démultiplexeurs, que chaque unité de raccordement de ligne (5 ) est associée à un module d'extension de bus (85), que dans le module d'extension de bus (85), il est prévu une partie d'extension d'émetteur (80), raccordée à la ligne de transmission de données (7) du bus d'émission à la ligne de transmission d'adresses (9) du bus d'émission, pour une cadence binaire élevée, que dans le module d'extension de bus (85), il est prévu une partie d'extension de récepteur (82), raccordée à la ligne de transmission de données (8) du bus de réception et à la ligne de transmission d'adresses (10) du bus de réception, pour une cadence binaire élevée,

qu'il est prévu un dispositif (84) de contrôle de la matrice de bus raccordée à la partie d'extension d'émetteur (80) et la partie d'extension de récepteur (82), et

qu'il est prévu des interrupteurs, au moyen desquels le circuit (84) de contrôle de la matrice de bus peut fermer ou ouvrir les conducteurs d'alimentation aboutissant aux lignes de bus d'émission ou de réception (11,12).

FIG 1

FIG 2

FIG 3

EP 0 186 141 B1

FIG 4

EP 0 186 141 B1

# FIG 5

FIG 6a

FIG 6b

# FIG 7

## FIG 8a

## FIG 8b

FIG 9

# FIG 10

# FIG 11

EP 0 186 141 B1